# EUROPÄISCHE PATENTSCHRIFT

(11) **EP 2 763 263 B1**
(45) Veröffentlichungstag und Bekanntmachung des Hinweises auf die Patenterteilung: **01.05.2019**
(21) Anmeldenummer: 14153799.3
(22) Anmeldetag: 04.02.2014
(51) Int. Cl.: H02J 3/06, H02J 3/38

(54) **Verfahren zum Betrieb einer fluktuierenden Energieerzeugungsanlage**
Method for operating a fluctuating energy generation system
Procédé de fonctionnement d'une installation de production d'énergie fluctuante

(30) Priorität: 04.02.2013 DE 102013101099
(43) Veröffentlichungstag der Anmeldung: 06.08.2014
(73) Patentinhaber: in.power GmbH, 55124 Mainz-Gonsenheim (DE)
(72) Erfinder: Hohmann, Niklas, 55124 Mainz (DE); Kinzelbach, Michael, 55122 Mainz (DE); Werum, Josef, 55124 Mainz (DE); Kraft, Johannes, 55118 Mainz (DE)
(74) Vertreter: Herrmann, Jochen

(56) Entgegenhaltungen:
- DE-U1-202010 016 207
- "Wind Turbines Connected to Grids with Voltages above 100kV", INTERNET CITATION, 3. Dezember 2004 (2004-12-03), Seiten 1-34, XP002542209, Gefunden im Internet: URL:http://www.energinet.dk/NR/rdonlyres/E 066A026-B4E1-4D5E-A729-80AC5458036A/0/Wind TurbinesConnectedtoGridswithVoltageabove10 0kV.pdf [gefunden am 2009-08-14]

## Beschreibung

Die Erfindung betrifft ein Verfahren zum Betrieb einer fluktuierenden Energieerzeugungsanlage, insbesondere eines Windkraftrades oder einer Photovoltaikanlage.

Insbesondere bezieht sich die Erfindung auf ein Verfahren zum Bereitstellen von Regelleistung, insbesondere Primärregelleistung, Sekundärregelleistung oder Minutenreserveleistung für ein elektrisches Energieerzeuger- und Verteilernetz, an welches eine Vielzahl von Energieerzeugern, beispielsweise Windkraftanlagen, Photovoltaikanlagen etc. angeschlossen sind. Solche Energieerzeuger- und Verteilernetze sind dann stabil, wenn die von den Energieerzeugern eingespeiste Energie der Abnahmeenergie der Verbraucher entspricht. Weicht nun die tatsächliche Energieerzeugung über ein gewisses Maß von dem Energieverbrauch ab, so wird in einem solchen System Regelenergie benötigt um Schwankungen der Netzfrequenz auszugleichen. In Deutschland sind daher die derzeit vier Übertragungsnetzbetreiber dazu aufgefordert, durch die Beschaffung von Regelenergie (Regelleistung) das Netzgleichgewicht wiederherzustellen.

Hinsichtlich der Reaktionsgeschwindigkeit unterscheidet man in drei Regelleistungsarten:
Primärregelleistung
Sekundärregelleistung
Minutenreserveleistung

Die Regelenergie lässt sich in positive und negative Regelenergie einteilen. Positive Regelenergie wird immer dann benötigt, wenn der Energieverbrauch größer als die Energieerzeugung ist. Durch Zuschaltung bzw. Leistungserhöhung von Erzeugungsanlagen oder Abschaltung bzw. Leistungsreduktion von Verbrauchern elektrischer Energie wird positive Regelenergie bereitgestellt.

Negative Regelenergie wird immer dann benötigt, wenn der Energieverbrauch kleiner als die Energieerzeugung ist. Durch Abschaltung bzw. Leistungsreduktion von Energieerzeugungsanlagen oder Zuschaltung bzw. Leistungserhöhung von Verbrauchern elektrischer Energie wird negative Regelenergie bereitgestellt.

Auf der Erzeugerseite wurde Regelenergie bisher durch steuerbare und stetig erzeugende Stromerzeugungsanlagen bereitgestellt. Hierzu zählen insbesondere Gaskraftwerke, Pumpenspeicherkraftwerke sowie Biogasanlagen. Diese Anlagen sind in der Lage, ihre Leistung anhand fest vorgegebener Arbeitspunkte zur Verfügung zu stellen. Die Bereitstellung negativer Regelleistung erfolgt dabei über die Reduktion des Arbeitspunktes, also die Leistungsreduktion, um einen definierten Wert auf einen fest definierten Arbeitspunkt über einen bestimmten Zeitraum (negatives Regelleistungsband).

Die Bereitstellung positiver Regelleistung erfolgt dabei über die Erhöhung des Arbeitspunktes, also die Leistungserhöhung um einen definierten Wert auf einen fest definierten Arbeitspunkt über einen bestimmten Zeitraum (positives Regelleistungsband).

An ein Energieerzeuger- und Verteilernetz werden zunehmend fluktuierende Energieerzeugungsanlagen angeschlossen. Fluktuierende Energieerzeugungsanlagen sind beispielsweise Windkraft- oder Photovoltaikanlagen. Diese haben im Gegensatz zu den vorbenannten Anlagen keinen festen Arbeitspunkt. Ihre Energieerzeugung ist abhängig von externen Einflüssen (z.B. Windgeschwindigkeit, Luftdruck oder Sonneneinstrahlung) und daher unstetig (fluktuieren). Aus diesem Grund konnten bisher fluktuierende Energieerzeugungsanlagen nicht für den Regelenergiemarkt berücksichtigt werden.

Dies liegt insbesondere darin begründet, dass sobald eine Leistungsänderung (z.B. Leistungsreduktion) an der Anlage vorgenommen wurde, keine verlässliche Aussage über die theoretisch maximal verfügbare Anlagenleistung (Pmax theoretisch; Leistung ohne vorgenommene Leistungsänderung) getroffen werden kann. Es kann daher nicht bestimmt werden, wie die Energieerzeugungsanlage zu regeln ist, sodass das geforderte konstante Band negativer oder positiver Regelleistung kontinuierlich bereitstellt wird.

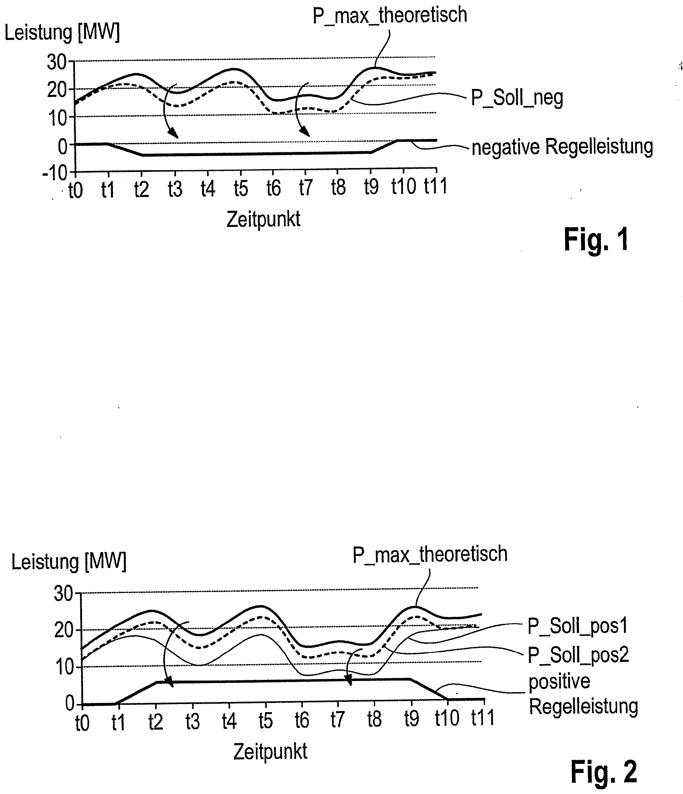

In dem Dokument "Wind Turbines Connected to Grids with Voltages above 100kV" (Internet Citation, 3. Dezember 2004 (2004-12-03), Seiten 1 - 34, XP002542209) sind Regelungsanforderungen für Windparks beschrieben, wie sie von den Netzbetreibern Eltra und Elkraft für den dänischen Strommarkt vorgegeben wurden. Eine darin beschriebene Regelfunktion mit der Bezeichnung "Delta Production Constraint" sieht eine mögliche Reduzierung der Stromproduktion eines Windparks um einen vorgegebenen Wert gegenüber einer unter den vorliegenden Bedingungen maximal möglichen Stromproduktion vor. Dabei kann die Leistungsreduzierung in Megawatt angegeben werden. Durch den Betrieb der Windkraftanlage bei reduzierter Leistung kann eine Regelreserve für kritische Leistungsanforderungen bereitgestellt werden. Wie insbesondere aus Figur 2 des Anhangs 2 (Abs. 2 "Delta Production Constraint") zu entnehmen ist, erfolgt die Regelung derart, dass die reduzierte Leistung mit einer konstanten Differenz der maximal möglichen Leistung des Windparks folgt. Die Schrift beschreibt somit einen möglichen Weg, eine Windenergieanlage mit einer gegenüber der unter den gegebenen Windbedingungen maximal verfügbaren Leistung (P_{possible}) soweit reduzierten Leistung (Pₛₑₜ₋ₚₒᵢₙₜ) zu betreiben, dass eine Bereitstellung einer vorgegebenen positiven Regelleistung jederzeit möglich ist.

Die Schrift DE 20 2010 016 207 U1 offenbart eine Photovoltaikanlage, deren maximal erzeugbare elektrische Leistung auch bei einem gedrosselten Arbeitspunkt der Photovoltaikanlage bestimmt werden kann. Dabei ist eine Referenzeinheit vorgesehen, welche zumindest zeitweise im maximalen Arbeitspunkt betrieben wird. Durch nachfolgende Drosselung des Arbeitspunktes der Referenzeinheit auf den gedrosselten Arbeitspunkt der Photovoltaikanlage kann ein Verhältnis der maximal möglichen Leistung und der Leistung bei gedrosseltem Arbeitspunkt für die Referenzeinheit ermittelt werden. Dieses Verhältnis kann auf die Photovoltaikanlage übertragen werden, sodass bei bekannter Leistung der Photovoltaikanlage bei gedrosseltem Arbeitspunkt deren maximale Leistung im maximalen Arbeitspunkt bestimmt werden kann.

Es ist daher Aufgabe der Erfindung, ein Verfahren zum Betrieb einer fluktuierenden Energieerzeugungsanlage derart bereitzustellen, dass diese effektiv in die Bereitstellung mit positiver oder negativer Regelleistung einbezogen werden kann.

Diese Aufgabe wird dadurch gelöst, dass zunächst ein tatsächlicher Leistungswert der Energieerzeugungsanlage ermittelt wird. Der tatsächliche Leistungswert kann dabei beispielsweise die theoretische Maximalleistung darstellen, die eine Energieerzeugungsanlage bei den vorgegebenen Verhältnissen liefern kann. Bei einer Windkraftanlage bedeutet dies, dass die Energieerzeugungsanlage bei den vorgegebenen Windverhältnissen und in Abhängigkeit von ihrer technischen Gestaltung einen bestimmten tatsächlichen Leistungswert abgeben könnte. Denkbar ist es auch, dass der tatsächliche Leistungswert unterhalb der theoretischen Maximalleistung liegt, um eine Betriebsweise zur Bereitstellung positiver Regelleistung zu erreichen. Der tatsächliche Leistungswert wird also im ersten Schritt ermittelt. Anschließend wird die aktuelle Leistungsabgabe der Energieerzeugungsanlage von einer Steuerschaltung in Abhängigkeit von einem Stellwert geregelt. Der Stellwert wird dabei aus der Summe (positive Regelleistung) oder Differenz (negative Regelleistung) des tatsächlichen Leistungswertes und einer vorgegebenen konstanten Regelleistung kontinuierlich ermittelt.

Aus Figur 1 ergibt sich beispielhaft die Vorgehensweise zur Bereitstellung negativer Regelleistung. In dieser Darstellung sind in einem Leistung-Zeitdiagramm der tatsächliche Leistungswert (Pmax theoretisch) sowie der Stellwert (Psoll neg) der Energieerzeugungsanlage dargestellt. Weiterhin ist in diesem Diagramm die negative Regelleistung dargestellt. Der tatsächliche Leistungswert entspricht im vorliegenden Ausführungsbeispiel der theoretisch maximal verfügbaren Anlagenleistung bei den vorgegebenen Umwelteinflüssen (bei Windkraftanlage, Windgeschwindigkeit und/oder Luftdruck). Wie aus diesem Diagramm erkennbar ist, folgt der tatsächliche Leistungswert (Pmax theoretisch) einer unstetigen Kurve. Wenn nun seitens des Übertragungsnetzbetreibers beginnend ab dem Zeitpunkt t2 eine negative Regelleistung von im Ausführungsbeispiel -5 MW angefordert wird, so beginnt ab dem Zeitpunkt t1 die Steuerschaltung der Energieerzeugungsanlage mit der Anlagenabregelung. Dabei wird dann die Anlagenleistung heruntergeregelt. Bei Windkraftanlagen kann dies durch die Variation der Anstellung der Rotorblätter erfolgen. Dabei erfolgt die Einstellung so, dass die aktuelle Leistungsabgabe (≙ Psoll neg) der Energieerzeugungsanlage, die letztendlich in das Energieerzeuger- und Verteilernetz eingespeist wird, um einen konstanten Betrag gegenüber dem tatsächlichen Leistungswert (Pmax theoretisch) abweicht, wie dies die beiden entsprechenden Kurven in Figur 1 verdeutlichen. Diese Differenz stellt dann eine konstante negative Regelleistung dar. Der konstante Kurvenverlauf ist in Figur 1 als Parallele zur Zeitachse dargestellt (negative Regelleistung). Dem Übertragungsnetzbetreiber werden also über den Zeitraum zwischen t2 und t9 die angeforderte negative Regelleistung von - 5 MW geliefert.

In Figur 2 ist die Vorgehensweise bei der Bereitstellung positiver Regelleistung durch eine fluktuierende Anlage gezeigt. Wie dieser Darstellung entnehmbar ist, ist der theoretisch maximal verfügbare Leistungswert (Pmax theoretisch) der Anlage wieder in Form eines unsteten Graphen gezeigt. Die aktuelle Leistungsabgabe (Psoll pos2) der Energieerzeugungsanlage wird in Abhängigkeit von dem Stellwert geregelt, der sich aus der Summe des heruntergeregelten tatsächlichen Leistungswertes Psoll pos1 und einer vorgegebenen konstanten Regelleistung (positive Regelleistung) ergibt. Bei dem Betriebsmodus zur Bereitstellung positiver Regelleistung wird ein besonders energieeffizienter Betrieb dadurch erreicht, dass die Energieerzeugungsanlage auf einem tatsächlichen Leistungswert (Psoll Pos1) betrieben wird, der gegenüber dem theoretisch maximal verfügbaren Leistungswert (Pmax theoretisch) der Energieerzeugungsanlage kleiner ist. Wenn die Energieerzeugungsanlage also für die Bereitstellung positiver Regelleistungen zur Verfügung stehen soll, so wird sie gegenüber dem theoretisch maximalen möglichen Leistungswert (Pmax theoretisch) in einem heruntergeregelten Leistungsbereich betrieben, der durch die den tatsächlichen Leistungswert (Psoll pos1) repräsentierenden Kurve dargestellt ist. Zu diesen tatsächlichen Leistungswerten (Psoll pos1) wird die vom Netzbetreiber abgerufene positive Regelleistung hinzuaddiert, sodass sich wie in Figur 2 dargestellt ein gleichbleibender Abstand zwischen den Kurven Psoll pos1 und Psoll pos2 ergibt. Dabei ist die Auslegung so gewählt, dass die Kurve Psoll pos 2 einen Sicherheitsabstand zu der Kurve einhält, die den maximalen theoretischen Leistungswert (Pmax theoretisch) repräsentiert. Auf diese Weise wird über den Zeitraum t2 bis t9 eine positive konstante Regelleistung von 5 MW zur Verfügung gestellt. Die Ein- bzw. Abregelung der Energieerzeugungsanlage erfolgt innerhalb eines Zeitintervalls (Einregelung t1 bis t2; Abregelung t9 bis t10).

Bei insbesondere Windkraftanlagen kann bei den gegebenen Windschwankungen mit gängigen Regelelektroniken eine zuverlässige Anlagenregelung dann einfach gelingen wenn vorgesehen ist, dass der Differenzwert zwischen dem theoretisch maximalen Leistungswert (Pmax theoretisch) und dem tatsächlichen Leistungswert (Psoll pos2) konstant oder mit einer Schwankungsbreite von +/- 20 % konstant geregelt wird.

Beim negativen Regelenergieabruf wird eine hohe Energieeffizienz dadurch gewährleistet, dass der tatsächliche Leistungswert dem theoretisch maximalen Leistungswert (Pmax theor) entspricht. Dabei kann es vorgesehen sein, dass der tatsächliche Leistungswert dem theoretisch maximalen Leistungswert (Pmax theor) mit einer Schwankungsbreite von bis zu -20% entspricht.

Gemäß einer bevorzugten Erfindungsausgestaltung kann es vorgesehen sein, dass der tatsächliche Leistungswert (Pmax theoretisch) aus einem von einer Sensorik ermittelten Kennwert der die Energieerzeugungsanlage antreibenden Energie ermittelt wird. Bei Windkraftanlagen kann beispielsweise die Sensorik einen Luftgeschwindigkeitsmesser und/oder einen Luftdruckmesser aufweisen. Bei einer Photovoltaikanlage kann beispielsweise in der Sensorik ein Solarstrahlungssensor verwendet sein, der als Kennwert beispielsweise die Solarstrahlung pro Fläche ermittelt.

Für die Ermittlung des tatsächlichen Leistungswertes (Pmax theoretisch) können verschiedene Verfahren eingesetzt werden. Beispielsweise ist es denkbar, dass der tatsächliche Leistungswert an einer Referenzanlage ermittelt wird. Die Ermittlung von Pmax theoretisch basiert hier auf der Annahme, dass eine einzelne Energieerzeugungsanlage oder ein Teil eines Parks von fluktuierenden Energieerzeugungsanlagen (z.B. Windpark oder Solarpark) ein ähnliches Verhalten (relative Leistungsänderung) wie die übrigen Einzelanlagen bzw. die Summe aller Einzelanlagen aufweisen. Bei dieser Methode wird die Referenzanlage nicht gesteuert oder geregelt, sodass sie unabhängig von einem Regelenergieabruf die gleiche Energiemenge produziert. Die Referenzanlage dient bei einem Regelenergieabruf als Referenzgröße für den gesamten Park. Mit Hilfe der aktuellen Leistungswerte der Referenzanlage wird Pmax theoretisch ständig neu errechnet. Dafür werden die aktuellen Leistungswerte der Referenzanlage auf die Gesamtleistung des Parks hochgerechnet. Der daraus abgeleitete bzw. berechnete Sollwert (notwendiger Arbeitspunkt) für die übrigen Erzeugungsanlagen des Parks wird schließlich an die Anlagensteuerung übermittelt. Die Referenzanlage kann in unmittelbarer räumlicher Zuordnung zu der Energieerzeugungsanlage betrieben werden, sodass sich optimale Vergleichswerte ergeben.

Wird die oben erwähnte Sensorik zur Ermittlung des tatsächlichen Leistungswertes eingesetzt, so kann der tatsächliche Leistungswert als Verrechnung des von der Sensorik ermittelten Kennwerts und eines für die Energieerzeugungsanlage anlagenspezifischen Kennlinienfeldes berechnet werden. Beispielsweise wird mit dieser Methode bei einer Windkraftanlage die durchschnittliche Windgeschwindigkeit in Nabenhöhe der jeweiligen Windkraftanlage ermittelt und zwar für einen definierten Zeitraum. Bei Photovoltaikanlagen kann beispielsweise die durchschnittliche Solarstrahlung senkrecht zur Moduloberfläche der Photovoltaikanlage von der Sensorik ermittelt werden. Aus dem gemessenen Kennwert für die Solarstrahlung und unter Berücksichtigung eines anlagenspezifischen Kennlinienfeldes wird dann Pmax theoretisch ermittelt.

Gemäß der Erfindung ist es vorgesehen, dass der tatsächliche Leistungswert als mittlerer Durchschnittswert innerhalb eines vorgegebenen Zeitintervalls gemessen wurde, der dem aktuellen Zeitpunkt vorgelagert war. Demgemäß kann beispielsweise die maximal verfügbare Leistung ein Ausgangssignal der Steuer- bzw. Regeleinheit der fluktuierenden Energieerzeugungsanlage sein. Von der Leistung des vergangenen Intervalls wird die angebotene Regelleistung abgezogen oder hinzuaddiert (negative Regelleistung oder positive Regelleistung). Dies ergibt dann den zu erzeugenden Sollwert, welcher an die Anlage übermittelt werden kann.

Um ein konstantes Regelverfahren gewährleisten zu können ist es vorgesehen, dass der Stellwert (Psoll neg, Psoll pos) der Steuerung der Energieerzeugungsanlage jeweils in aufeinanderfolgenden Perioden mit gleichbleibender Periodendauer vorgegeben wird.

Um auf sich ändernde Parameter der antreibenden Energie der Energieerzeugungsanlage mit ausreichender Regelgeschwindigkeit reagieren zu können, muss das Zeitintervall zur Ermittlung des tatsächlichen Leistungswertes Pmax theoretisch; Psoll pos1 möglichst klein sein. Besonders geeignet sind Zeitintervalle mit einer Dauer ≤ 60 Sekunden. Dies entspricht der geforderten zeitlichen Auflösung (innerhalb der Bereitstellung von Regelenergie). Das vorgegebene Zeitintervall zur Ermittlung des tatsächlichen Leistungswertes (Pmax theoretisch; Psoll Pos 1) oder des Stellwertes (Psoll neg; Psoll pos) entspricht daher einer geforderten zeitlichen Auflösung beim Bereitstellen von Regelenergie.

Mit dem erfindungsgemäßen Regelverfahren können fluktuierende Energieerzeugungsanlagen in die Bereitstellung von Regelenergie einbezogen werden, wobei diese Energieerzeugungsanlagen nicht aufwendig technisch umgerüstet werden müssen.

Eine Erfindungsvariante basiert auf dem Grundgedanken, wonach sich die durchschnittliche Leistung in einem Zeitintervall tn nur geringfügig zu der durchschnittlichen Leistung im Zeitintervall tn-1 verändert. Die Veränderung der Leistung zwischen den beiden Zeitintervallen wird zudem noch kleiner, sobald man einen Pool von mehreren Parks (z.B. Windparks, Solarparks) betrachtet (Pool-Effekt). Somit wird grundsätzlich eine hohe Regelgenauigkeit erzielbar.

## Patentansprüche

1. Verfahren zum Betrieb einer fluktuierenden Energieerzeugungsanlage, insbesondere einer Windkraftanlage oder einer Photovoltaikanlage,
wobei ein tatsächlicher Leistungswert (Pmax theoretisch; Psoll Pos 1) ermittelt wird, wobei die Energieerzeugungsanlage auf einem tatsächlichen Leistungswert (Psoll Pos1) betrieben wird, der gegenüber dem theoretisch maximalen Leistungswert (Pmax theoretisch) der Energieerzeugungsanlage kleiner ist und/oder dass der tatsächliche Leistungswert (Pmax theoretisch) dem theoretisch maximalen Leistungswert (Pmax theoretisch) entspricht, **dadurch gekennzeichnet, dass** die aktuelle Leistungsabgabe (Psoll neg, Psoll pos2) der Energieerzeugungsanlage in Abhängigkeit von einem Stellwert geregelt wird, der aus der Summe oder Differenz des tatsächlichen Leistungswertes (Pmax theoretisch; Psoll Pos1) und einer vorgegebenen konstanten Regelleistung (negative Regelleistung; positive Regelleistung) kontinuierlich ermittelt wird, dass der Stellwert der Steuerung der Energieerzeugungsanlage jeweils in aufeinanderfolgenden Perioden mit gleichbleibender Periodendauer vorgegeben wird, dass der tatsächliche Leistungswert (Pmax theoretisch; Psoll Pos 1) als mittlerer Durchschnittswert innerhalb eines vorgegebenen Zeitintervalls gemessen wurde, der dem aktuellen Zeitpunkt vorgelagert war und dass das vorgegebene Zeitintervall zur Ermittlung des tatsächlichen Leistungswertes (Pmax theoretisch; Psoll Pos 1) oder des Stellwertes (Psoll neg; Psoll pos) einer geforderten zeitlichen Auflösung beim Bereitstellen von Regelenergie entspricht.

2. Verfahren nach Anspruch 1,
**dadurch gekennzeichnet,**
**dass** der Differenzwert zwischen dem theoretisch maximalen Leistungswert (Pmax theoretisch) und dem tatsächlichen Leistungswert (Psoll pos1) konstant oder mit einer Schwankungsbreite von +/- 20 % konstant geregelt wird.

3. Verfahren nach einem der Ansprüche 1 oder 2,
**dadurch gekennzeichnet,**
**dass** der tatsächliche Leistungswert (Psoll pos1) dem theoretisch maximalen Leistungswert (Pmax theoretisch) mit einer Schwankungsbreite von bis zu -20 % entspricht.

4. Verfahren nach einem der Ansprüche 1 bis 3,
**dadurch gekennzeichnet,**
**dass** der tatsächliche Leistungswert (Pmax theoretisch, Psoll pos1) aus einem von einer Sensorik ermittelten Kennwert der die Energieerzeugungsanlage antreibenden Energie ermittelt wird.

5. Verfahren nach Anspruch 4,
**dadurch gekennzeichnet,**
**dass** die Sensorik die Windgeschwindigkeit und/oder den Luftdruck ermittelt

6. Verfahren nach Anspruch 4,
**dadurch gekennzeichnet,**
**dass** die Sensorik die Solarstrahlung ermittelt.

7. Verfahren nach einem der Ansprüche 1 bis 6,
**dadurch gekennzeichnet,**
**dass** der tatsächliche Leistungswert (Pmax theoretisch, Psoll pos1) an einer Referenzanlage ermittelt wird.

8. Verfahren nach Anspruch 7,
**dadurch gekennzeichnet,**
**dass** die Referenzanlage in unmittelbarer räumlicher Zuordnung zu der Energieerzeugungsanlage betrieben wird.

9. Verfahren nach einem der Ansprüche 4 bis 8,
**dadurch gekennzeichnet,**
**dass** der tatsächliche Leistungswert (Pmax theoretisch; Psoll Pos 1) als Verrechnung des von der Sensorik ermittelten Kennwerts und eines für die Energieerzeugungsanlage anlagenspezifischen Kennlinienfelds berechnet wird.

10. Verfahren nach einem der Ansprüche 1 bis 9,
**dadurch gekennzeichnet,**
**dass** das vorgegebene Zeitintervall zur Ermittlung des tatsächlichen Leistungswertes (Pmax theoretisch; Psoll Pos 1) oder des Stellwertes (Psoll neg; Psoll pos) ≤ 60 Sekunden ist.

## Claims

1. A method for operating a fluctuating energy generation system, in particular a wind turbine or a photovoltaic system,
wherein an actual power value (Pmax theoretical; Psoll Pos 1) is determined, wherein the energy generation system is operated at an actual power value (Psoll Pos1) which is smaller than the theoretical maximum power value (Pmax theoretical) of the energy generation system, and/or wherein the actual power value (Pmax theoretical) corresponds to the theoretical maximum power value (Pmax theoretical),
**characterised in that** the current power output (Psoll neg, Psoll pos2) of the energy generation system is controlled depending on a control value which is determined continuously from the sum or difference of the actual power value (Pmax theoretical; Psoll Pos1) and a predefined constant control power (negative control power; positive control power), **in that** the control value is predefined to the controller of the energy generation system in successive periods with constant period duration, **in that** the actual power value (Pmax theoretical; Psoll Pos 1) was measured as a mean average value within a predefined time interval that was before the current moment in time, and **in that** the predefined time interval for determining the actual power value (Pmax theoretical; Psoll Pos 1) or the control value (Psoll neg; Psoll pos) corresponds to a requested temporal resolution when providing control energy.

2. The method according to claim 1,
**characterised in that**
the value of the difference between the theoretical maximum power value (Pmax theoretical) and the actual power value (Psoll pos1) is constant or is controlled to be constant with a fluctuation range of +/- 20%.

3. The method according to one of claims 1 or 2,
**characterised in that**
the actual power value (Psoll pos1) corresponds to the theoretical maximum power value (Pmax theoretical) with a fluctuation range of up to -20%.

4. The method according to one of claims 1 to 3,
**characterised in that**
the actual power value (Pmax theoretical, Psoll pos1) is determined from a characteristic value of the energy driving the energy generation system, said characteristic value being determined by a sensor system.

5. The method according to claim 4,
**characterised in that**
the sensor system determines the wind speed and/or the air pressure.

6. The method according to claim 4,
**characterised in that**
the sensor system determines the solar radiation.

7. The method according to one of claims 1 to 6,
**characterised in that**
the actual power value (Pmax theoretical, Psoll pos1) is determined on a reference system.

8. The method according to claim 7,
**characterised in that**
the reference system is operated in direct spatial association with the energy generation system.

9. The method according to one of claims 4 to 8,
**characterised in that**
the actual power value (Pmax theoretical; Psoll Pos1) is calculated as an offsetting of the characteristic value determined by the sensor system and of a system-specific set of characteristic curves for the energy generation system.

10. The method according to one of claims 1 to 9,
**characterised in that**
the predefined time interval for determining the actual power value (Pmax theoretical; Psoll Pos1) or the control value (Psoll neg; Psoll pos) is ≤ 60 seconds.

## Revendications

1. Procédé de fonctionnement d'une installation de production d'énergie fluctuante, en particulier d'une installation éolienne ou d'une installation photovoltaïque,
dans lequel est déterminée une puissance réelle (Pmax théorique ; Pcons Pos 1), l'installation de production d'énergie fonctionnant à une puissance réelle (Pcons Pos1), laquelle est inférieure par rapport à la puissance maximale théorique (Pmax théorique) de l'installation de production d'énergie et/ou en ce que la puissance réelle (Pmax théorique) correspond à la puissance maximale théorique (Pmax théorique),
**caractérisé en ce que** l'indication de puissance actuelle (Pcons nég, Pcons pos2) de l'installation de production d'énergie est régulée en fonction d'une valeur de réglage, laquelle résulte en continu de la somme ou différence de la puissance réelle (Pmax théorique ; Pcons Pos1) et d'une performance de régulation constante donnée (performance de régulation négative ; performance de régulation positive), **en ce que** la valeur de réglage de la commande de l'installation de production d'énergie est donnée dans chaque cas par périodes successives avec une durée constante, **en ce que** la puissance réelle (Pmax théorique ; Pcons Pos 1) a été mesurée comme valeur moyenne dans un intervalle de temps donné précédant l'instant actuel et **en ce que** l'intervalle de temps donné pour déterminer la puissance réelle (Pmax théorique ; Pcons Pos 1) ou la valeur de réglage (Pcons nég ; Pcons pos) correspond à une résolution temporelle requise lors de la fourniture de l'énergie de régulation.

2. Procédé selon la revendication 1,
**caractérisé en ce**
**que** la valeur différentielle entre la puissance maximale théorique (Pmax théorique) et la puissance réelle (Pcons pos1) est constante ou régulée de manière constante avec une plage de fluctuation de ± 20 %.

3. Procédé selon l'une des revendications 1 ou 2,
**caractérisé en ce**
**que** la puissance réelle (Pcons pos1) correspond à la puissance maximale théorique (Pmax théorique) avec une plage de fluctuation allant jusqu'à -20 %.

4. Procédé selon l'une des revendications 1 à 3,
**caractérisé en ce**
**que** la puissance réelle (Pmax théorique, Pcons pos1) est déterminée à partir d'une valeur caractéristique, déterminée par un système de capteurs, de l'énergie faisant fonctionner l'installation de production d'énergie.

5. Procédé selon la revendication 4,
**caractérisé en ce**
**que** le système de capteurs détermine la vitesse du vent et/ou la pression atmosphérique.

6. Procédé selon la revendication 4,
**caractérisé en ce**
**que** le système de capteurs détermine le rayonnement solaire.

7. Procédé selon l'une des revendications 1 à 6,
**caractérisé en ce**
**que** la puissance réelle (Pmax théorique, Pcons pos1) est déterminée sur une installation de référence.

8. Procédé selon la revendication 7,
**caractérisé en ce**
**que** l'installation de référence fonctionne en association spatiale directe avec l'installation de production d'énergie.

9. Procédé selon l'une des revendications 4 à 8,
**caractérisé en ce**
**que** la puissance réelle (Pmax théorique ; Pcons Pos 1) est calculée en tant que compensation de la valeur caractéristique déterminée par le système de capteurs et d'un réseau de caractéristiques spécifique à l'installation de production d'énergie.

10. Procédé selon l'une des revendications 1 à 9,
**caractérisé en ce**
**que** l'intervalle de temps donné pour déterminer la puissance réelle (Pmax théorique ; Pcons Pos 1) ou la valeur de réglage (Pcons nég ; Pcons pos) est ≤ 60 secondes.
